# EUROPEAN PATENT APPLICATION

(11) **EP 2 806 710 A1**
(43) Date of publication of application: **26.11.2014**
(21) Application number: 13738328.7
(22) Date of filing: 17.01.2013
(51) Int. Cl.: H05B 6/10, B29C 65/04, E04D 5/14, E04D 15/00, H05B 6/06

(54) **ELECTROMAGNETIC INDUCTIVE HEATING DEVICE**

(30) Priority: 17.01.2012 JP 2012006892
(71) Applicant: Sika Technology AG, 6340 Baar (CH)
(72) Inventor: YOSHIKAWA, Soichi, Kanagawa 254 0021 (JP)
(74) Representative: Sika Patent Attorneys
(86) International application number: PCT/JP2013/050764
(87) International publication number: WO 2013/108820

(57) **Abstract**

The present invention relates to an electromagnetic induction heater for fixing a sheet to a fixing member having a conductive substrate and a thermoplastic resin layer, the aforementioned electromagnetic induction heater containing: means for heating the conductive substrate via the sheet by electromagnetic induction; means for measuring the temperature of the sheet; and heating time determination means for determining the heating time, depending on the temperature of the sheet, by the means for heating, wherein the sheet is fixed by the fixing member by the heat adhesion of the thermoplastic resin layer caused by heating the conductive substrate. It is possible for the heater according to the present invention to fix a sheet to fixing members even when the temperature change on the sheet is large due to differences in the seasons and weather, and can fix a sheet onto the fixing members uniformly and reliably even when the fixing of the sheet takes a relatively long time.

## Description

### TECHNICAL FIELD

Priority is claimed on Japanese Patent Application No. 2012-6892, filed on January 17, 2012, the content of which is incorporated herein by reference.

The present invention relates to an electromagnetic induction heater, and in particular, relates to an electromagnetic induction heater for placing a sheet for the purpose of water-proof on a rooftop of a building or the like.

### BACKGROUND ART

When a water-resistant sheet is placed on a rooftop of a building or the like, for example, for the purpose of water-proofing, it is necessary to fix the water-resistant sheet to the surface of the rooftop in some means. As one of the aforementioned means, a fixing method using an electromagnetic induction heater has been known.

In a method for fixing a water-resistant sheet using an electromagnetic induction heater, for example, several fixing members, each having a thermoplastic resin layer of a hot-melt adhesive or the like on a disc formed from a conductive material such as a metal, are placed by scattering on the floor surface of a rooftop. Each fixing member is fixed to the floor surface of the rooftop by means of a fixture such as an anchor nail or the like. Subsequently, a water-resistant sheet is placed on the fixing members and the floor surface of the rooftop. Thereafter, for example, the locations of the fixing members are confirmed by means of visual observation of uneven portions of the water-resistant sheet at which the fixing members are placed. Then, an electromagnetic induction heater is placed on the fixing member via the water-resistant sheet.

The power supply of the electromagnetic induction heater mounted on the fixing member is turned on, to allow current to flow in a heating coil provided at the inner part of the apparatus. Thereby, magnetic flux generates around the heating coil. The aforementioned magnetic flux passes through the fixing member. Eddy currents flow in the disc, and the fixing member is subjected to electromagnetically induction heating. When the disc of the fixing member is heated, the thermoplastic resin layer of the fixing member melts. Thereby, the water-resistant sheet is thermally bonded and fixed to the fixing member. The aforementioned method is disclosed in, for example, Japanese Unexamined Patent Application, First Publication No. H 10-140774.

### Prior Art Documents

### Patent Documents

Patent Document 1: Japanese Examined Patent Application, Second Publication No. H10-140774

### SUMMARY OF INVENTION

### Technical Problems

The surface exposed to the external world such as a floor surface of a rooftop of a building or the like may have a large temperature change due to differences in seasons and weather and the like, and a large day-night change in temperatures may occur even in a day. However, at present, operators manually adjust the heating level, for example, by 2 stages, in accordance with the seasons, weather or the like. For this reason, it is difficult to finely adjust the heating level, for example, considering the temperature differences between the temperature at the portion exposed to sunlight and the temperature at the portion other than the aforementioned sunlight-exposed portion.

Therefore, it may become difficult to obtain a sufficient fixing condition between the fixing members and the water-resistant sheet, according to the operation time of placing the water-resistant sheet, weather and the like. In addition, the floor surface of a rooftop is wide. For these reasons, a fair amount of time for the operation of placing the water-resistant sheet may be required. In this case, even if it is possible to obtain a good fixing condition between some of the fixing members and the water-resistant sheet, a fixing condition between the remaining fixing members and the water-resistant sheet may be degraded.

The present invention has been made in view of the problems of the aforementioned prior art. An objective of the present invention is to provide an electromagnetic induction heater by which the fixing members and the sheet can be sufficiently fixed even if the temperature change at the surface on which the sheet is placed is increased according to seasons, weather or the like, and all the fixing members can be uniformly and reliably fixed to the sheet even if a significant amount of time is required for placing the sheet.

### Technical Solution

The objective of the present invention can be achieved by: an electromagnetic induction heater for fixing a sheet to a fixing member having a conductive substrate and a thermoplastic resin layer, containing:
a means for heating the aforementioned conductive substrate via the aforementioned sheet by electromagnetic induction;
a means for measuring the temperature of the aforementioned sheet; and
a heating time determination means for determining the heating time, depending on the temperature of the aforementioned sheet, by the means for heating,
wherein the aforementioned sheet is fixed by the aforementioned fixing member by the heat adhesion of the aforementioned thermoplastic resin layer caused by heating the aforementioned conductive substrate.

The aforementioned means for heating is preferably connected to a high frequency power supply.

The aforementioned electromagnetic induction heater preferably contains, around the aforementioned means for heating, a plurality of location detecting sensors for detecting the locations of the aforementioned fixing members.

The electromagnetic induction heater of the present invention preferably contains a display part which shows the results of the location detection by the location detecting sensors.

The aforementioned means for measuring the temperature is preferably a non-contact type thermometer.

The aforementioned heating time determination means preferably determines the heating time by selecting heating time corresponding to the temperature of the aforementioned sheet measured by the means for measuring the temperature, from predetermined combinations of a plurality of temperatures and heating times which are correlated and recorded.

The aforementioned conductive substrate preferably contains metal.

The aforementioned sheet preferably contains a thermoplastic resin.

### Effects of the Invention

The electromagnetic induction heater of the present invention can control the heating time in accordance with the temperature of a sheet to be fixed. For this reason, even if the temperature change of the surface on which the sheet is placed is increased according to seasons, weather or the like, the fixing members can be well fixed to the sheet by adjusting the heating time. In addition, even if long time is required for placing the sheet, allowing the environmental temperature to change from the initial stage of the operation, all the fixing members can be uniformly and reliably fixed to the sheet. In addition, efficiency of the operation time can also be promoted.

When the aforementioned means for heating is connected to a high frequency power supply, electromagnetic induction heating can be effectively carried out.

When the aforementioned electromagnetic induction heater contains, around the aforementioned means for heating, a plurality of location detecting sensors for detecting the locations of the aforementioned fixing members, the locations of the fixing members can be detected even if it is difficult to visibly confirm the locations of the fixing members via the sheet due to some reasons, e.g., the conductive substrates of the fixing members are embedded in the floor surface, and therefore, when a sheet is placed on the floor surface and the fixing members, an increased difference in level is not present on the aforementioned sheet.

When the electromagnetic induction heater of the present invention contains a display part which shows the results of the location detection by the location detecting sensors, the locations of the fixing members can be easily detected.

When the aforementioned means for measuring the temperature is a non-contact type thermometer, the temperature of the sheet can be more rapidly and more easily measured.

When the aforementioned heating time determination means determines the heating time by selecting a heating time corresponding to the temperature of the aforementioned sheet measured by the means for measuring the temperature, from predetermined combinations of a plurality of temperatures and heating times which are correlated and recorded, it is possible to set the heating time based on past experience, and heat adhesion can be reliably realized.

When the aforementioned conductive substrate contains metal, the electromagnetic induction heating can be easily carried out, and conduction of the heat generated by the electromagnetic induction to the thermoplastic resin layer can be sufficiently carried out.

When the aforementioned sheet contains a thermoplastic resin, the fixing strength between the fixing members and the sheet can be enhanced.

### BRIEF DESCRIPTION OF DRAWINGS

[Fig. 1] A perspective view of a fixing member according to one embodiment of the present invention.
[Fig. 2] A general cross-sectional view showing a mode of placing a sheet and a fixing member according to one embodiment of the present invention.
[Fig. 3] An apparatus block diagram of an electromagnetic induction heater according to one embodiment of the present invention.
[Fig. 4] A perspective view of an apparatus body of an electromagnetic induction heater according to one embodiment of the present invention.
[Fig. 5] A perspective view of a heating holder of an electromagnetic induction heater according to one embodiment of the present invention.
[Fig. 6] A schematic view showing a constitution of location detecting sensors in one embodiment of the present invention.
[Fig. 7] A schematic view showing a constitution of a display part in one embodiment of the present invention.

### MODES FOR CARRYING OUT THE INVENTION

Hereinafter, one embodiment of an electromagnetic induction heater of the present invention is described with reference to the drawings.

In one embodiment of the present invention, when a sheet is placed on a floor surface of a rooftop of a building for the purpose of water-proofing or the like, fixing members, each fixing member having a conductive substrate and a thermoplastic resin layer, are placed on specified locations of the floor surface of the rooftop; a sheet covering the aforementioned fixing members is placed over the entire floor surface; the aforementioned conductive substrates are heated by means of electromagnetic induction heating over the aforementioned sheet; the aforementioned thermoplastic resin layers are melted by the aforementioned heat; and thereby, the aforementioned sheet is fixed to the aforementioned fixing members.

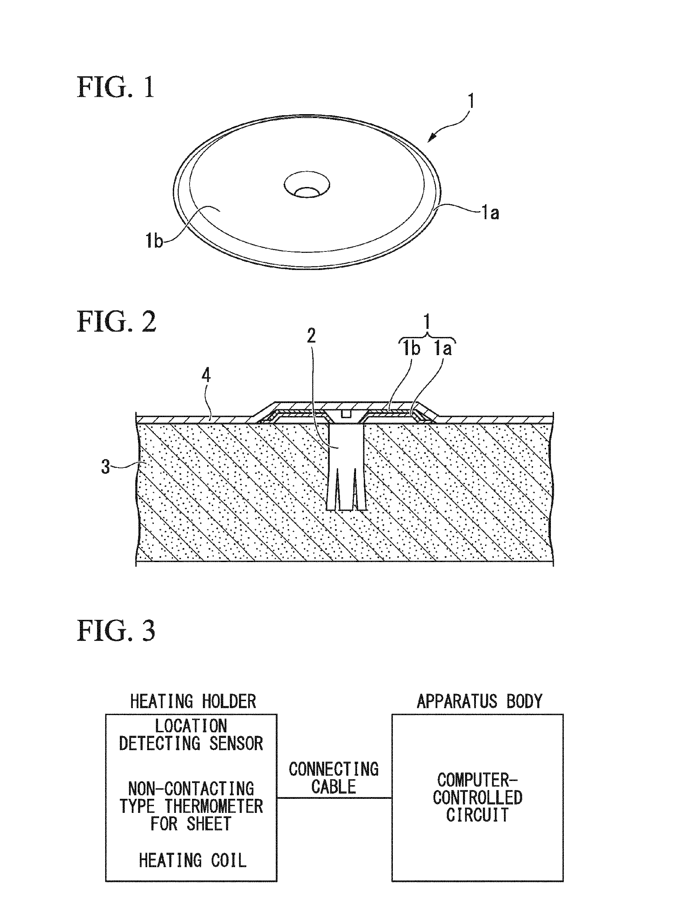

Fig. 1 indicates a fixing member according to one embodiment of the present invention.

In this embodiment, a fixing member 1 has a double layered structure in which a thermoplastic resin layer 1b which is thermally meltable covers an upper surface of a conductive substrate 1a which is a thin plate in the form of a disc. In this embodiment, a through-hole is formed at the central part of the fixing member 1.

The thickness of the conductive substrate 1a is not particularly limited, and can range, for example, from 0.1 to 5 mm. The thickness preferably ranges from 0.3 to 3 mm and more preferably ranges from 0.5 to 1.5 mm. The thickness of the thermoplastic resin layer 1b is not particularly limited, and can range, for example, from 0.01 to 1 mm. The thickness preferably ranges from 0.05 to 0.5 mm and more preferably ranges from 0.01 to 0.1 mm.

The material of the conductive substrate 1a is not particularly limited as long as the material is electrically conductive. Any one of inorganic conductive materials and organic conductive materials can be used. In view of thermal conductivity, a metal such as iron, stainless steel, copper, aluminum or the like or an alloy thereof is preferable. In view of electromagnetic induction heating properties, iron or stainless steel is more preferable. In view of difficulty of occurrences of rust, stainless steel is particularly preferable. An iron plate which has been plated with a non-ferrous metal such as zinc, aluminum or an alloy thereof can also be used.

The fixing member 1 can be produced by, for example, a method in which a coating of a thermoplastic resin layer 1b is formed on the surface of a disc 1a obtained by punch-pressing a stainless steel plate into a dish-shaped one, or a method in which a coating of a thermoplastic resin layer 1b is formed on a stainless steel plate, and the coated plate is punch-pressed into a dish shape.

The material of the thermoplastic resin layer 1b is not particularly limited as long as the material can be thermally melted. One or more types of polymers of polyolefin, polystyrene, polyvinyl acetate, polyvinyl alcohol, polyvinyl acetal, polyacrylate, polyacrylamide, polyacrylonitrile, polyether, polyvinyl chloride, polyvinylidene chloride, polyester, polyamide, polyimide, polysulfone and the like, and copolymers formed from the aforementioned constitutional monomers can be used. A hot-melt adhesive can also be used. As the hot-melt adhesive, one formed from, for example, vinyl acetate, an ethylene-vinyl acetate copolymer, polyvinyl butyral, polyolefin, polyamide, polyester, a thermoplastic synthetic gum or the like can be appropriately used. They can be used alone or in combination of two or more types thereof.

Fig. 2 indicates a mode of setting a sheet and a fixing member according to one embodiment of the present invention.

In this embodiment, the fixing member 1 shown in Fig. 1 is fixed to a floor surface 3 by means of an anchor nail 2 which goes through a through-hole formed at the central part of the fixing member 1. A sheet 4 is placed thereon so that the sheet 4 covers the floor surface 3 and the fixing member 1. The setting mode of the fixing member 1 on the floor surface 3 is not particularly limited. For example, two lines of the fixing members can be arranged at 50 cm intervals at the peripheral part of the floor surface, and the fixing members can be alternately arranged at 1 m intervals in the inner side of the floor surface.

The thickness of the sheet 4 is not particularly limited, and can range, for example, 0.4 to 5 mm. The thickness preferably ranges from 0.8 to 3 mm, and more preferably ranges from 1 to 2 mm.

The material of the sheet 4 is not particularly limited, and a material having properties which are in alignment with the purpose of setting the sheet is preferable. For example, in the case of using the sheet 4 for the purpose of water-proofing, the material of the sheet 4 preferably possesses water-resistant properties. For example, in this case, a non-water-soluble thermoplastic resin or thermosetting resin or a mixture thereof can be used.

As examples of the non-water-soluble thermoplastic resins, mention may be made of polyolefin, polystyrene, polyvinyl acetate, polyacrylate, polyacrylamide, polyacrylonitrile, polyether, polyvinyl chloride, polyvinylidene chloride, polyester, polyamide, polyimide, polysulfone, thermoplastic synthetic gum, and the like. In the case of using a hot-melt adhesive as a hot-thermoplastic resin layer 1b, a resin which has a compatibility with the aforementioned hot-melt adhesive is preferable. For example, polyolefin, polyvinyl chloride, an ethylene-vinyl acetate copolymer, a thermoplastic synthetic gum or the like can be used. In addition, in the case of using a thermoplastic resin other than a hot-melt adhesive as a thermoplastic resin layer 1b, the thermoplastic resin for forming the sheet 4 is preferably one which has a compatibility with the thermoplastic resin forming the thermoplastic resin layer 1b in view of fixing strength. The thermoplastic resin forming the sheet 4 is more preferably the same as that forming thermoplastic resin layer 1b. For example, in the case of the thermoplastic resin layer 1b being formed from a polyvinyl chloride, the sheet 4 is preferably formed from a polyvinyl chloride.

As examples of the non-water-soluble thermosetting resins, mention may be made of polyurethane, phenolic resin, epoxy resin, urea resin, melamine resin and the like. Polyurethane is preferable.

The sheet 4 may be a single layer or a laminate having two or more layers. In the case of a laminate having two or more layers, one layer may be formed from a thermoplastic resin, and the other layer may be formed from a thermosetting resin. In view of compatibility with the thermoplastic resin layer 1b and in view of resistance with respect to high-temperature environment in summertime, the layer side contacting the fixing member 1 is preferably formed from a thermoplastic resin, and the surface layer side which is exposed to the external world is preferably formed from a thermosetting resin.

Fig. 3 indicates a general constitution of an electromagnetic induction heater according to one embodiment of the present invention.

The electromagnetic induction heater according to one embodiment of the present invention is constituted by two segments of a heating holder and an apparatus body. The heating holder contains, at least, a heating coil for use in induction-heating a conductive substrate of a fixing member, location detecting sensors of the fixing member, and a non-contacting type thermometer for use in measuring the temperature of the sheet. On the other hand, the apparatus body contains, at least, a control circuit and a computer constructing a heating time determination means for determining the heating time by the heating coil. The apparatus body of the electromagnetic induction heater of the present invention can be connected to a power supply which is not shown in the drawings. On the other hand, the heating holder can be connected to the apparatus body by a connecting cable. The connecting cable can be removed from both the heating holder and the apparatus body.

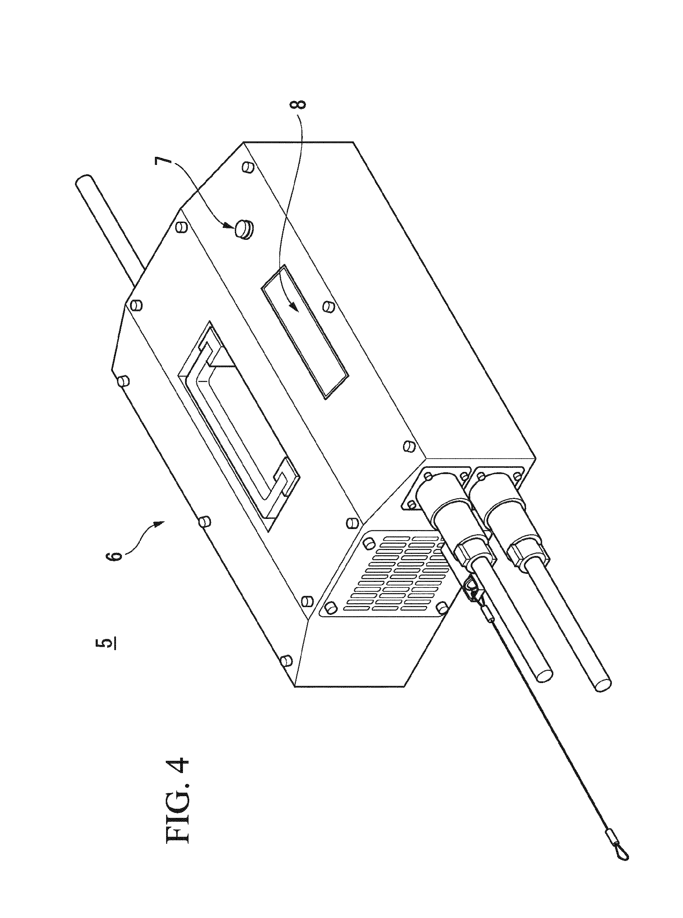

Fig. 4 indicates an apparatus body 6 of an electromagnetic induction heater 5 according to one embodiment of the present invention.

In the embodiment shown in Fig. 4, the apparatus body 6 contains a main power supply indication lamp 7 and a display 8. An operator connects the apparatus body 6 to a power supply. Thereby, electric power is supplied from the power supply, and a computer and a control circuit in the apparatus body 6 are on. The main power supply indication lamp 7 is lighted, and the condition of the electromagnetic induction heater 5 can be indicated on the display 8.

The apparatus body 6 can be usually used by connecting to a commercially available alternating-current power supply. The apparatus body 6 preferably contains a high frequency power supply (oscillator) by which alternating current from the AC power supply can be converted into high frequency alternating current. By means of the high frequency power supply, electromagnetic induction heating can be effectively carried out.

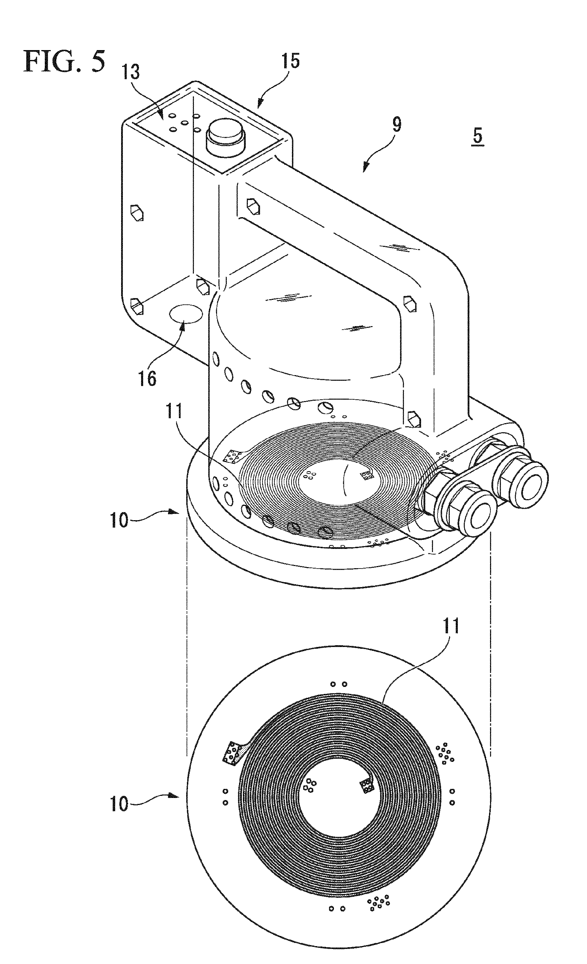

Fig. 5 indicates a heating holder 9 of an electromagnetic induction heater 5 according to one embodiment of the present invention.

In the embodiment shown in Fig. 5, the heating holder 9 incorporates a heating coil 11 for use in electromagnetic induction heating in a heating head 10 in a general disc shape at the lower part of the heating holder. An electric current is supplied from an apparatus body 6 to the heating coil 11 via a connecting cable not shown in the drawing. Thereby, the heating coil 11 generates magnetic flux, and an eddy current is generated in a conductive substrate 1a of a fixing member 1 which is to be heated. The conductive substrate 1a can be heated by an electric resistance of the conductive substrate 1a, itself.

In addition, in the embodiment shown in Fig. 5, the heating head 10 incorporates a plurality of location detecting sensors detecting the location of fixing member 1. Even if it is difficult to visibly confirm the location of the fixing member 1 from the sheet 4, the location of the fixing member 1 can be detected. As the location detecting sensors, conventionally known ones can be used.

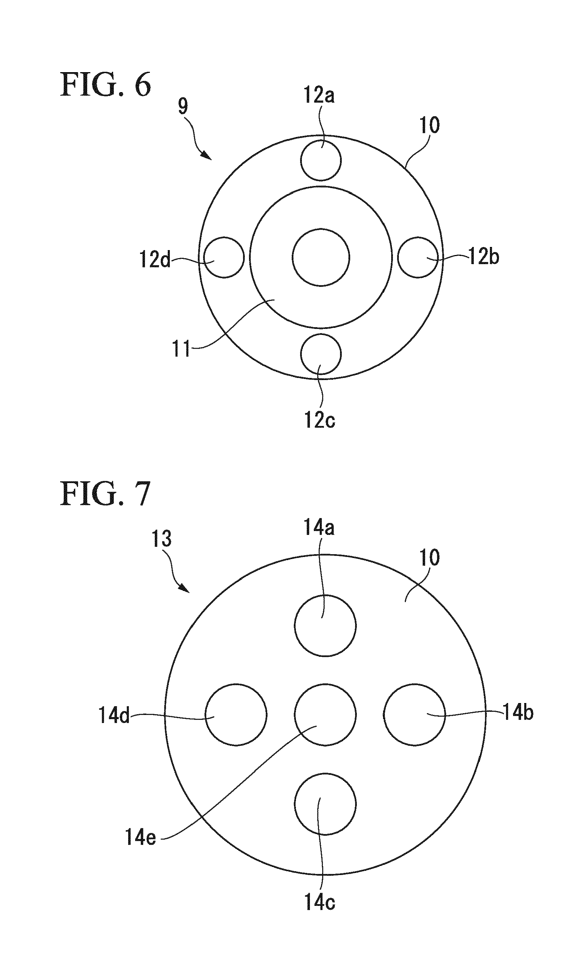

Fig. 6 is a drawing which indicates a construction of location detecting sensors in one embodiment of the present invention, and is a perspective drawing from the lower surface side of a heating head 10. In this embodiment, four location detecting sensors 12a to 12d are arranged in about 90° intervals at the periphery of a heating coil 11 located at the center of the heating head 10. The location detecting sensors 12a to 12d are incorporated in the heating head 10. The location detecting sensors 12a to 12d are connected to a computer of an apparatus body 6.

Each of the location detecting sensors 12a to 12d is constituted, for example, by a compact coil. A pulse electric current with a specified frequency is supplied thereto by resonance circuit which is not shown in the drawings. When the compact coil approaches to a conductive substrate 1a of a fixing member 1, the frequency of an AC current which the compact coil carries is increased. For this reason, the condition of the frequency is monitored by a computer of an apparatus body 6, and thereby, the location detecting sensors 12a to 12d can detect the presence of the conductive substrate 1a of the fixing member 1.

In the electromagnetic induction heater according to the present embodiment, by pushing a start button 15 of a heating holder 9, an electric current is supplied from the apparatus body 6, and thereby, the location detecting sensors 12a to 12d are set to automatically operate. In addition, the location detecting sensors 12a to 12d are electrically connected to a display part 13 of the heating holder 9. The detected results of the location detecting sensors 12a to 12d can be indicated in a display part 13 of the heating holder 9.

The display part 13 is constituted by five display lights 14a to 14e, as shown in Fig. 7. The display lights 14a to 14d are respectively arranged in the same arrangement pattern as that of the location detecting sensors 12a to 12d. When any one of the location detecting sensors 12a to 12d detects the conductive substrate 1a of the fixing member 1, the corresponding display light 14a, 14b, 14c, or 14d lights up.

Therefore, for example, under the condition in which only the location detecting sensor 12a at the upper end detects the conductive substrate 1a, only the display light 14a at the upper end of the display part 13 shown in Fig. 7 lights up. Under this condition, an operator moves the heating holder 9 to the direction of the display 14a at the upper end. When the conductive substrate 1a is positioned under the heating head 10 and all the location detecting sensors 12a to 12d detect the conductive substrate, a display lamp 14e present at the center of the display part 13 is on, in addition to display lamps 14a to 14d which have lighted up. By confirming the lighting of the display lamp 14e, the operator can easily know that the heating coil 11 is properly positioned on the conductive substrate 1a of the fixing member 1.

In addition, the heating holder 9 contains a non-contacting type thermometer 16, the surface temperature of the sheet 4 can be measured in a non-contacting manner. As the non-contacting type thermometer 16, a publicly known non-contacting type thermometer such as an infrared detection type non-contacting type thermometer or the like can be used. The non-contacting type thermometer 16 is connected to a computer of the apparatus body 6. The non-contacting type thermometer 16 measures the surface temperature of the sheet 4 when the heating coil 11 is properly positioned on the conductive substrate 1a of the fixing member 1 after an operator pushes a start button 15 and subsequently moves the heating holder 9. The result of the surface temperature measured is transferred to a computer of the apparatus body 6.

The computer and control circuit of the apparatus body 6 can control the current supply to the heating coil 11 in accordance with the specified programs based on the value of the surface temperature of the sheet 4 measured by the non-contacting type thermometer 16, and can control the induction heating due to the heating coil 11.

Therefore, when an operator pushes the start button 15, the electromagnetic induction heater 5 is first in a detection mode of detecting the conductive substrate 1a. The operator moves the heating holder 9 with reference to the display content of the display part 13 to properly carry out the positioning of the heating coil 11 on the conductive substrate 1a of the fixing member 1. Then, the surface temperature of the sheet 4 is measured by means of the non-contacting type thermometer 16. The induction heating of the conductive substrate 1a of the fixing member 1 by the heating coil 11 is started in the heating mode specified in accordance with the temperature value.

When the induction heating by the specific heating mode by the heating coil 11 is completed, for example, only a display lamp 14e of the display part 13 lights up, and the completion of heating is displayed. Subsequently, the electromagnetic induction heater 5 again returns a detection mode (wait mode) of detecting the conductive substrate 1a. Therefore, after an operator pushes the start button 15, the operator can detect the location of the conductive substrate 1a of the fixing member 1 to be subsequently heated, with reference to the display part 13.

Next, a water-proofing process by using the electromagnetic induction heater according to one embodiment of the present invention is described with reference to the case of providing a sheet for the purpose of water-proofing the floor surface of a rooftop of a building.

First, the fixing members 1, each containing the conductive substrate 1a and the thermoplastic resin layer 1b, are placed at specific intervals, for example, on a grid, at the specified positions of the floor surface 3 of a rooftop of a building. Each of the fixing members 1 is preferably fixed to the floor surface 3 by hammering an anchor nail 2 via a through-hole (see Fig. 2) formed at the central part of the fixing member 1.

Subsequently, a sheet 4 which is wide is placed so that the sheet 4 covers the entire surface of the floor surface 3 at which the fixing members 1 are placed.

On the other hand, the apparatus body 6 of the electromagnetic induction heater 5 is connected with the heating holder 9 by means of a connecting cable, and in addition, the apparatus body 6 is further connected to the alternate current power supply (for example, voltage = 100 V, and frequency = 50 Hz or 60 Hz). Thereby, the computer and the control circuit of the apparatus body 6 are ON. The main power supply indication lamp 7 lights up, and the display 8 starts indication.

When the start button 15 is pushed, the location detecting sensors 12a to 12d of the heating holder 9 start actuation. The detected results are indicated on the display part 13. An operator moves the heating holder 9 on the sheet 4 while holding the heating holder 9. The location of the heating holder 9 is adjusted while the operator is checking the indication content on the display part 13. Thereby, the position of the heating coil 11 of the heating holder 9 is precisely adjusted on the conductive substrate 1a of the fixing member 1.

When the position of the heating coil 11 is precisely determined on the conductive substrate 1a of the fixing member 1, the non-contacting type thermometer 16 of the heating holder 9 automatically measures the surface temperature of the sheet 4. The measurement result is transferred to the computer of the apparatus body 6.

Data of combinations with various values of the sheet temperature and the optimal heating time at the values of the sheet temperature, obtained by advance experiments, have been recorded as a data base in the memory of the computer. The computer selects the heating time for the temperature of the sheet 4 measured by means of the non-contacting type thermometer 16 from the combinations of a plurality of temperature values and the heating times which have been linked and recorded in advance as described above. The computer automatically sets the heating time of the heating coil 11. The aforementioned data base for "temperature - heating time" may be one pattern, but some patterns of the data bases therefor are preferably prepared, in accordance with the types of materials of the sheet, types of the fixing members and the like. For example, the apparatus body 6 is equipped with an inputting means for inputting types of materials of the sheet 4 and the like. The computer is preferably programed so that the data base corresponding to the sheet material is selected from a plurality of data bases in accordance with the result input by the operator by means of the inputting means.

After the heating time is set as described above, the control circuit of the apparatus body 6 supplies electric currents to the heating coil 11 to carry out induction heating of the conductive substrate 1a. Thereby, the thermoplastic resin layer 1b of the fixing member 1 melts, and the fixing member 1 is adhered to the sheet 4. After the heating time is completed, supplying of the current to the heating coil 11 is stopped and the induction heating is finished. Thereby, the thermoplastic resin layer 1b is solidified, and the fixing member 1 is strongly fixed to the sheet 4.

As described above, the electromagnetic induction heater of the present invention can appropriately control the heating time of fixing members in accordance with the temperature of a sheet. For this reason, fixing of the sheet to the fixing members can be reliably carried out. In particular, in the case of the temperature of the sheet being low, the temperature of the thermoplastic resin layer present just below the aforementioned sheet is also low, and for this reason, the heating time can be increased to reliably melt the thermoplastic resin layer. On the other hand, in the case of the temperature of the sheet being high, the temperature of the thermoplastic resin layer of the fixing member is also high, and for this reason, the heating time can be reduced.

Therefore, for example, in the wintertime, the temperature of the sheet is low, and for this reason, increasing the heating time can reliably fix the fixing members to the sheet. On the other hand, in the summertime, the temperature of the sheet is relatively high, and for this reason, the heating time can be reduced, and the operation time can also be reduced. In the same manner as described above, during the night, the temperature of the sheet is relatively low, and for this reason, the heating time can be relatively increased. On the other hand, during the day, the temperature of the sheet is relatively high, and for this reason, the heating time can be reduced. In addition, the setting of the heating time is automatically carried out. For this reason, it is not necessary for an operator to set the heating time through a trial and error process, and therefore, the electromagnetic induction heaters of the present invention can make operations simple.

### INDUSTRIAL APPLICABILITY

The electromagnetic induction heaters of the present invention can be used not only for water-proofing the floor surface of a rooftop of a building, but also for various operations utilizing electromagnetic induction heating such as installation of various sheets in a building, water-proofing the surface of a tunnel, installation of interior parts to a rooftop, a wall, a floor or the like of a transportation means such as a motor vehicle, a train, a ship, and an airplane.

## Claims

1. An electromagnetic induction heater for fixing a sheet to a fixing member having a conductive substrate and a thermoplastic resin layer, comprising:
a means for heating the conductive substrate via the sheet by electromagnetic induction;
a means for measuring the temperature of the sheet; and
a heating time determination means for determining the heating time, depending on the temperature of the sheet, by the means for heating,
wherein
the sheet is fixed by the fixing member by the heat adhesion of the thermoplastic resin layer caused by heating the conductive substrate.

2. The heater according to Claim 1, wherein the means for heating is connected to a high frequency power supply.

3. The heater according to Claim 1 or 2, wherein the heater comprises, around the means for heating, a plurality of location detecting sensors for detecting the locations of the fixing members.

4. The heater according to Claim 3, wherein the heater comprises a display part which shows the results of the location detection by the location detecting sensors.

5. The heater according to any one of Claims 1 to 4, wherein the means for measuring the temperature is a non-contact type thermometer.

6. The heater according to any one of Claims 1 to 5, wherein the heating time determination means determines the heating time by selecting heating time corresponding to the temperature of the sheet measured by the means for measuring the temperature, from predetermined combinations of a plurality of temperatures and heating times which are correlated and recorded.

7. The heater according to any one of Claims 1 to 6, wherein the conductive substrate comprises metal.

8. The heater according to any one of Claims 1 to 7, wherein the sheet comprises thermoplastic resin.
